Europäisches Patentamt

European Patent Office

Office européen des brevets

(11) Publication number: **0 283 172 B1**

# EUROPEAN PATENT SPECIFICATION

(45) Date of publication of patent specification: **22.04.92**   (51) Int. Cl.⁵: **F16C  33/20**, C08G 18/28, C08G 18/61

(21) Application number: **88301875.6**

(22) Date of filing: **03.03.88**

(54) **Load-bearing article having surface lubricity.**

(30) Priority: **03.03.87 US 21111**
**21.12.87 US 135346**

(43) Date of publication of application:
**21.09.88 Bulletin  88/38**

(45) Publication of the grant of the patent:
**22.04.92 Bulletin  92/17**

(84) Designated Contracting States:
**BE DE FR GB IT NL**

(56) References cited:
**EP-A- 0 103 367**
**EP-A- 0 122 743**
**US-A- 4 594 402**

(73) Proprietor: **ICI AMERICAS INC.**
**Concord Pike & New Murphy Road**
**Wilmington Delaware 19897(US)**

(72) Inventor: **Robertson, John R.**
**59 Paul Lane**
**Glen Mills Pennsylvania(US)**

(74) Representative: **Arnold, Graham Donald et al**
**Imperial Chemical Industries PLC Legal De-**
**partment: Patents PO Box 6**
**Welwyn Garden City Herts, AL7 1HD(GB)**

Rank Xerox (UK) Business Services

**Description**

FIELD OF THE INVENTION

This invention relates to articles adapted for use in load-bearing applications and/or environments where low friction is desirable or an important consideration. The articles have a functional surface fabricated from a polymer made from monomers containing polyisocyanate in an amount sufficient to contribute at least 10 percent by weight to the polymer. The polymer has a reduced coefficient of friction by virtue of having reacted therein a slip agent which is, therefore, permanent.

BACKGROUND OF THE INVENTION

Articles adapted for use in load-bearing and/or frictional environments by virtue of including lubricants therein such as bearings, bearing sleeves, rollers, and beltings, are known. U.S. patent 3,985,660 to Lankamp, for example, discloses bearing materials which consist essentially of 50-90 per cent by weight of a powdered solid lubricant bonded by a polymerized mixture of unsaturated organic compounds containing at least 30% divinylbenzene. Lubricants such as $MoS_2$, $WSe_2$, barium nitride, and graphite are disclosed.

U.S. patent 2,991,206 to Miller et al. discloses a solid film lubricant comprising a suspension of molybdenum disulfide in an epoxy phenolic resin combination, which is applied to prepared surfaces of titanium and titanium-containing alloys, air-dried and then cured by application of heat. An object of the invention is stated to be the provision of a lubricant for surfaces in frictional contact with each other.

U.S. patent 3,075,297 to Haltner et al. discloses a method of providing a bearing surface for utilization in a sliding bearing relationship wherein a clean crack free chromium surface is frictionally engaged with a solid form of $MoS_2$. The $MoS_2$ is moved over the chromium surface with a force sufficient to attach a thin film of $MoS_2$ thereto, following by burnishing the surface.

U.S. patent 3,198,735 to Lamson et al. discloses a composition for forming a bonded film for a bearing structure wherein the dry film composition is bonded to the component parts of the bearing with either a water soluble metallic phosphate or a water soluble metallic borate.

U.S. patent 3,882,030 to Campbell et al. discloses a self-lubricating polymeric composition consisting essentially of an arylene sulfide polymer and at least one solid lubricating component. Solid lubricating components such as molybdenum dislufide, molybdenum diselenide, tungsten disulfide, tungsten diselenide and mixtures thereof are disclosed as being useful.

U.S. patent 3,608,054 to Alvino et al. discloses antifriction high temperature composites formed of a metal or other support or substrate and a cast thin lubricating film which has a plastic matrix containing a multiplicity of dispersed small discrete solid lubricant filler particles. The plastic is either an aromatic polyamide-imide or an aromatic polyamide and the filler is a finely divided solid lubricant such as $MoS_2$.

U.S. Patents 4,477,366, 4,498,929, 4,504,313, and 4,546,154 to J. R. Robertson are directed to polyurethanes, polyurea and polyurea urethane resins having an improved mold release properties which are made by including with the reactive ingredients certain internal mold release agent which are polysiloxane polymers having pendant organic groups which contain at least one hydroxyl, amino or mercapto group.

SUMMARY OF THE INVENTION

This invention provides a load-bearing article adapted for use in a frictional environment, said article having at least its functional surface fabricated from a polymer made from reactants comprising

(i) a polyisocyanate in an amount of at least about 10 wt. percent based on the total weight of all reactants used to make said polymer,

(ii) an active hydrogen-containing compound having a number-averaged active hydrogen functionality of at least 2.0, and

(iii) a slip agent compound containing a moiety which imparts lubricity to said surface, said slip agent compound also having at least one active hydrogen-containing group which is reactive with isocyanate groups, wherein said slip agent compound is present in an amount between about 0.5 and about 5 weight percent based on the weight of (i) and (ii),

the ratio of (i) to the total of (ii) plus (iii) being such that the reaction is conducted at an isocyanate index between about 0.90 and about 1.30.

"Load-bearing" refers to an article intended to withstand applied pressure due to the application of force (e.g. weight).

"Frictional Environment" means a use environment in which at least a portion of the functional surface of the load bearing article is in sliding and/or rolling (i.e. frictional) contact with an adjacent surface.

"Functional surface" means that portion of a load-bearing article's surface which, in use, is actually intended to be in frictional contact or engagement with an adjacent surface.

"Polyisocyanate", as used above and in the claims, refers to mixtures of polyisocyanates as well as to single species thereof. "Active hydrogen-containing compound" and "slip agent compound" are used in like manner to refer to mixtures containing two or more species of each as well as single species of each.

"Lubricity" imparted to a load bearing article, for purposes of this invention, denotes that the friction of the article's surface, when in rolling or sliding contact with any other surface is lower relative to an article identical therewith except that it does not contain a slip agent compound.

By this invention a load bearing article is provided which can be of conventional construction. At least the outer portion of the article's functional surface is fabricated from reactants comprising a polyisocyanate and an active hydrogen-containing compound such as a polyol, a polyamine, or a mixture thereof in which case the article material is classed, respectively, as a polyurethane, a polyurea, or a polyurethaneurea. At least 10 weight percent of the final polymer must be derived from the polyisocyanate, based on the weight of all reactants (i.e. excluding non-reactive fillers and other non-reactive additives) used to make the polymer.

Other monomers containing isocyanate-reactive groups can also be used within the scope of the invention, including compounds containing carboxylic acid groups, sulfide groups, or anhydride groups (in which case imide linkages are formed within the polymer). Slip is built directly into the polymer material used to make the article by virtue of including, as a reactant, a compound (herein also called a slip agent or slip agent compound) having a moiety which imparts lubricity to the article and at least one group which is reactive with isocyanate groups in the polyisocyanate. This slip agent itself is thus an active hydrogen compound.

"Slip" as used herein denotes that the slip agent imparts lubricity to the article surface such that friction between the article and a surface with which it is frictionally engaged is lowered relative to an article identical thereto but for inclusion of the slip agent. By virtue of its isocyanate-reactivity, the slip agent actually becomes a part of the polymer, and is not susceptible to being ultimately removed by normal wear or machining as would a film which is not an integral part of the polymer. Moreover, because the slip agent is actually part of the polymer formulation used to make the article, the slip agent remains evenly distributed throughout, in contrast to an unbound slip agent which would be free to migrate through the article continuously to the surface, eventually to be lost following repeated machining or through normal wear. Whether surface is lost through wear or by intentionally machining, whatever fresh surface becomes exposed has lubricity properties essentially identical to the old surface since the slip agent is evenly distributed throughout the polymer formulation.

As previously noted, a "load bearing article" need not be fabricated completely from a polymer containing a slip agent (although total fabrication is within the scope of the invention), but rather an article according to the invention can be an article which has a surface coating of such a polymer, the polymer being applied as, for example, a paint or a liner held in place by means of a suitable adhesive. The following types of articles, all of which have at least the outer portion of their functional surface fabricated from a polymer containing a slip agent are exemplary load bearing articles within the scope of this invention: children's sliding boards, artificial ski slopes and ice rinks, bearings, idler rollers and conveyor belts, chute liners, snowplows, snow sled runners, pipe liners, mud flaps, bowling lanes, sliding door liners, boat hull coatings, submarine coatings, weaving shuttles, snow shovels, foam molds, coatings for artificial joints, and the like.

DETAILED DESCRIPTION OF THE INVENTION

Suitable active hydrogen-containing compounds, component (ii), for use in this invention include polyether polyols, polyester polyols, and amine-terminated polyethers. The polyols preferably possess a hydroxyl number of from about 20 to about 150, preferably from 28 to 56. Such limits are not intended to be restrictive but are merely illustrative of the large number of possible combinations of the polyol or polyols used. The relatively high molecular weight hydroxyl-containing polyols which can be employed herein are those polyether and polyester polyols which have an average hydroxyl functionality of from 2 to 4, preferably from 2 to 3 and an average hydroxyl equivalent weight of from 500 to 3000, preferably from 1000 to 2000, including mixtures thereof.

Suitable relatively high molecular weight polyether polyols which can be employed herein include those which are prepared by reacting an alkylene oxide, halogen substituted or aromatic substituted alkylene oxide or mixtures thereof with an active hydrogen-containing initiator compound.

Suitable oxides include, for example, ethylene oxide, propylene oxide, 1,2-butylene oxide, 2,2-butylene oxide, styrene oxide, epichlorohydrin, epibromohydrin, mixtures thereof and the like.

Suitable initiator compounds include water, ethylene glycol, propylene glycol, butanediol, hexanediol, glycerine, trimethylol propane, pentaerythritol, hexanetriol, sorbitol, sucrose, hydroquinone, resorcinol, catechol, bisphenols, novolac resins, phosphoric acid, mixtures thereof and the like.

Also suitable as initiators for the relatively high molecular weight polyols include, for example, ammonia, ethylenediamine, diaminopropanes, diaminobutanes, diaminopentanes, diaminohexanes, diethylenetriamine, triethylenetetramine, tetraethylenepentamine, pentaethylenehexamine, ethanolamine, aminoethylethanolamine, aniline, 2,4-toluenediamine, 2,6-toluenediamine, diaminodiphenyloxide (oxydianiline), 2,4'-diaminodiphenylmethane, 4,4'-diaminodiphenylmethane, 1,3-phenylenediamine, 1,4-phenylenediamine, naphthylene-1,5-diamine, triphenylmethane4,4' , 4"-triamine, 4,4'-di(methylamino)-diphenylmethane, 1-methyl2-methylamino-4-aminobenzene, 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, 1,3,5-triethyl-2,6-diaminobenzene, 3,5,3',5'-tetraethyl-4,4'-diaminodiphenylmethane and amine aldehyde condensation products such as the polyphenylpolymethylene polyamines produced from aniline and formaldehyde, mixtures thereof and the like.

Suitable polyester polyols which may be employed herein include, for example, those prepared by reacting a polycarboxylic acid or anhydride thereof with a polyhydric alcohol. The polycarboxylic acids may be aliphatic, cycloaliphatic, aromatic and/or heterocyclic and may be substituted (e.g., with halogen atoms) and/or unsaturated. Examples of carboxylic acids of this kind include succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dimeric and trimeric fatty acids, such as oleic acid, which may be in admixture with monomeric fatty acids, terephthalic acid dimethyl ester; terephthalic acid bisglycol ester and the like. Mixtures of such acids or anhydrides may also be employed.

Examples of suitable polyhydric alcohols include ethylene glycol, 1,2-propylene glycol; 1,3-propylene glycol; 1,4-, 1,2- and 2,3-butylene glycol; 1,6-hexane diol; 1,8-octane diol; neopentyl glycol; cyclohexane dimethanol (1,4-bis-hydroxy-methyl. cyclohexane) 2-methyl-1,3-propane diol; glycerol; tri-methylol propane; 1,2,6-hexane triol; 1,2,4-butane triol; tri-methylol ethane; pentaerythritol; quinitol; mannitol; sorbitol; methyl glycoside; diethylene glycol; triethylene glycol; tetraethylene glycol; polyethylene glycol; dipropylene glycol; polypropylene glycols; dibutylene glycol; polybutylene glycols and the like. The polyesters may contain some terminal carboxyl groups. It is also possible to use polyesters of lactones such as caprolactone, or hydroxy carboxylic acids such as hydroxy caproic acid.

Other polyols which can be employed herein include polymer-containing polyols such as, for example, those disclosed in U.S. Patent Nos. RE 29,118 (Stamberger), RE 28,715 (Stamberger), RE 29,014 (Pizzini et al.) and 3,869,413 (Blankenship et al.) all of which are incorporated herein by reference.

In addition to those above-described polyols are the polymer/polyol blends which are normally liquid stable polymer/polyol compositions formed by polymerizing in the presence of a free radical catalyst from about 10 to about 50 weight percent of a mixture of an ethylenically unsaturated monomer such as acrylonitrile or styrene of mixtures thereof dissolved or dispersed in a polyol mixture.

Amine terminated-equivalents of the above described polyols and blends therewith can be used in making polyurea and polyureaurethanes. Polyoxyalkylene polyamines and cyano-alkylated polyoxyalkylene polyamines having a molecular weight of 1000-10,000 with a preferred range of 2000 to 7000 which have the general formula:

$$H_2NCH_2\text{-}CXH(OCH_2CHX)_yNH_2$$

where X is H or alkyl group having 1-18 carbon atoms and where y is a number of about 20-200, and triamines of poly-alkoxylated trimethylol propane having the general formula:

$$CH_3CH_2C[CH_2(OCH_2\text{-}CHX)_zNH_2]_3$$

where z is an average of 10-100 are also useful materials for the blends of the invention. These amines can be prepared according to the procedure outlined in a U.S. Patent No. 3,666,788 the teachings of which are hereby incorporated by reference. These materials have the general formula:

R[(OCH$_2$CHX)$_n$OCHYCHZNHA]$_m$

where R is the nucleus of an oxyalkylation-susceptible aliphatic polyhydric alcohol containing 2-20 carbon atoms and 2-6 hydroxyl groups, A is hydrogen or a cyano or lower alkyl radical having one or two carbon atoms between the nitrogen and cyano radical provided at least one A is a cyano-lower-alkyl radical, Z is an alkyl group containing 1-18 carbon atoms, n has an average value 10-100 and m is 2-6, R is saturated and consists of carbon and hydrogen. The methyl and ethyl alkyl groups of A may be substituted by lower alkyl groups.

The blends may include lower molecular weight polyols and polyamines than those listed above.

Suitable polyisocyanates, component (i), include those organic compounds that contain at least two isocyanate groups. The polyisocyanates have an average isocyanate functionality of 1.9-2.5, preferably 2.0-2.3. Such compounds are well known in the art.

The preferred polyisocyanates used in the invention are aromatic derivatives which are preferably liquids at room temperatures. Suitable materials are readily commercially available such as the isomers of toluenediisocyanate, diphenylmethane diisocyanate (MDI) and methylene bridged polyphenylmethane polyisocyanates (also known as polymeric MDI). Many of the polyphenyl polymethylene polyisocyanates which are prepared by aniline formaldehyde condensations followed by phosgenation ("crude MDI"), and MDI which has been modified to contain carbodiimide groups, uretonimine groups, urethane groups, sulfonate groups, isocyanurate groups, urea groups or biuret groups and derivatives thereof containing minor amounts of pre-reacted low molecular weight polyols such as ethylene glycol and propylene glycol or hydroxy esters to form stable liquids are useful. MDI containing carbodiimide groups, uretonime groups, urethane groups, sulfonate groups, isocyanurate groups, urea groups, or biuret groups are preferred and can be obtained as known in the art as distillation fractions taken following the preparation of polymeric MDI. MDI modified as described above and blended with polymeric MDI is also preferred. Such combinations are readily available and well known in the urethane manufacturing art. Of interest to this invention are compositions containing 4,4′-diphenylmethane diisocyanate which is a quasi prepolymer containing about 10 weight % or about 0.1-0.3 mol percent of low molecular weight polyols such as propylene glycol, butylene glycol, ethylene glycol and poly-1,2-propylene ether glycols having a molecular weight of from 134 to 700. Of additional suitability for use in the invention are carbodiimide and uretonimine modified derivatives of diphenylmethane diisocyanates which have been further modified by the addition of high molecular weight polyols such as polyether diols and triols having a molecular weight of 1000-8000.

The preferred polyisocyanates used with an active hydrogen-containing compound according to the invention are aromatic derivatives which are liquids at room temperatures. Such materials are readily commercially available such as the isomers of toluene diisocyanate, diphenylmethane diisocyanate and methylene bridged polyphenylmethane polyisocyanates.

Room temperature liquid derivatives of 2,4-and 4,4′-diphenylmethane diisocyanate containing carbodiimide groups, uretonimine groups, urethane groups, sulphonate groups, isocyanurate groups, urea groups or biuret groups and derivatives thereof containing minor amounts of prereacted low molecular weight polyols such as propylene glycol and butylene glycol or hydroxy esters to form stable liquids are useful.

Many of the polyphenyl polymethylene polyisocyanates which are prepared by aniline formaldehyde condensations followed by phosgenation (crude MDI) may be used and similar derivatives as described for 2,4 and 4,4′ diphenylmethane diisocyanate together with mixtures of these.

Similar derivatives of toluene diisocyanate may be prepared and used alone or as mixtures with the 2,4-and 4,4′-diphenylmethane diisocyanate derivatives.

Suitable aliphatic polyisocyanates include isophorone diisocyanate; 1,6-hexamethylene diisocyanate; 1,4-cyclohexyl diisocyanate; saturated analogues of the above mentioned aromatic polyisocyanates, mixtures thereof and the like. If aliphatic polyisocyanates are employed, they are preferably used alone, but can be used as a blend with an aromatic polyisocyanate. If a blend is used the weight ratio of aliphatic polyisocyanate to aromatic polyisocyanate can vary in all proportions.

Useful as a slip agent/active hydrogen compounds, component (iii), are fatty alcohols containing from 10-40 carbon atoms in the fatty hydrophobic tail, preferably 15-40 carbon atoms, and most preferably 16-30 carbon atoms. The fatty alcohol hydrophobic tail is preferably completely saturated, although some unsaturation can be tolerated without negating its slip function. Branching is also desirable.

Examples of suitable fatty alcohols include n-decyl alcohol, n-undecyl alcohol, n-dodecyl alcohol, n-tetradecyl alcohol, n-hexadecyl alcohol, n-octadecyl alcohol, and isostearyl alcohol. Suitable fatty alcohols are readily commercially available under the name "PRIMAROL".

Also useful as slip agents are secondary monoamines of the formula

$R^1$-NH-$R^2$

wherein $R^1$ is an aliphatic hydrocarbon group having from 10-40 carbon atoms, preferably 15-40 carbon, and most preferably 16-40 carbon atoms, and $R^2$ is an aliphatic hydrocarbon group containing 1-20 carbon atoms, preferably 1-6 carbon atoms. Branched saturated hydrocarbon groups are preferred as $R^1$ and $R^2$. Suitable long chain secondary monoamines are available under the trademark ALAMINE and include N-dodecyl-1-dodecanamine; N-tetradecyl-1-tetradecanamine; N-hexadecyl-1-hexadecanamine; and N-octadecyl-1-octadecanamine. Preferred are secondary amines under the designation ADOGEN, including di tridecyl amine (ADOGEN 283) and di hydrogenated tallow amine (ADOGEN 240).

Slip agents suitable for use herein are also disclosed as internal mold release agents in U.S. patent 4,504,313, commonly assigned, and can consist essentially of 0.5-20 mol% of $R_a R'_b SiO_{[4-(a+b)]/2}$ Units and from 99.5-80 mol % of $R''_c SiO_{(4-c)/2}$ units where

R is an isocyanate reactive organic radical,
a has an average value of from 1-3,
R′ and R″ are hydrocarbon radical or a substituted organic radical,
b has an average value of 0-2,
a + b is from 1-3,
c has an average value from 1 to 3, and

wherein

(d) the ratio of the total molecular weight to the total number of isocyanate reactive functional groups in the polysiloxane molecule (equivalent weight) ranges from 100-3500;

(e) the combined formula weights of all isocyanate reactive organic radicals, R do not exceed 40% of the total molecular weight of the slip agent;

(f) the combined formula weights of all non-isocyanate reactive radicals, R′ + R″ together do not exceed 40% of the total molecular weight of the polysiloxane slip additive;

(g) the combined formula weights of all the organic radicals R + R′ + R″ in the molecule together do not exceed 55-60% of the total molecular weight of the molecule:

(h) the polysiloxane slip agent(s) each contain an average of at least two isocyanate reactive functional groups per molecule;

(i) at least two of the isocyanate reactive functional groups in each molecule are located on separate organic radicals, R, attached independently to different silicon atoms in the polysiloxane molecule:

(j) the isocyanate reactive functional groups which may be employed in the polysiloxane molecule(s) can be any of the following types:

1) alcohols,
2) phenols,
3) thiols,
4) primary or secondary aromatic amines, which contain no oxygen, and have not more than one nitrogen atom attached directly to, in conjugation with, or incorporated within, the aromatic ring nucleus,
5) secondary aliphatic amines wherein at least one of the alkyl carbon atoms, bonded directly to the nitrogen atom, is not a primary carbon atom,

The groups may be used independently or in any combination which is consistent with conditions a-f:

(k) the molecular weight of the polysiloxane slip agent is between 1000 and 30,000, preferably 2000-15,000 and most preferred 4000-8000.

(l) the polysiloxane slip agent(s) are substantially insoluble in liquid polyisocyanates, especially those named hereinbefore.

In these slip agents the hydroxy, mercapto, or amino organic R radicals having preferably a molecular weight in the range of 100-400 can be attached to the silicon atom directly to carbon or through oxygen, nitrogen or sulfur carbon bonds. Particularly preferred R radicals are those of the formula HO-R‴-, $H_2$N-R‴-, HN$R_2$‴, HS-R‴-, wherein R‴ is a divalent linking group composed of carbon and hydrogen; carbon, hydrogen and oxygen; carbon, hydrogen and sulfur; carbon, hydrogen and nitrogen; or carbon, hydrogen, oxygen and nitrogen. Specific examples of R‴ include the methylene, ethylene, propylene, hexamethylene, decamethylene, -$CH_2$CH($CH_3$)-$CH_2$-, phenylene, butyl phenylene, naphthylene, -$CH_2$$CH_2$SCH$_2$$CH_2$-, -$CH_2$$CH_2$OCH$_2$-, -$CH_2$$CH_2$-$C_H$2-O($C_H$2-CHR′O)$_n$-, where n is 0-5 where R′ is described as above or H). A preferred R group is

-$CH_2$$CH_2$$CH_2$O($CH_2$CH($CH_3$)O)$_n$H

where n = 1-5 and has an hydroxyl equivalent weight of 500-2000. It is preferred that the R''' linking group contains from 3-10 atoms in addition to hydrogen atoms. There can be from 1-33 functional R radicals, preferably 3-10, and from 1-3 attached to a silicon atom.

As indicated above, the R' radical can be any hydrocarbon or substituted organic radical. Illustrative of the R' radicals that can be present are alkyl radicals such as the methyl, ethyl, propyl, butyl, amyl, hexyl, octyl, decyl, dodecyl, and octadecyl, and myricyl radicals, alkenyl radicals such as the vinyl, allyl, and hexenyl radicals; cycloalkyl radicals such as the cyclobutyl and cyclohexyl radicals; aryl radicals such as the phenyl, xenyl and naphthyl radicals; aralkyl radicals such as the benzyl and 2-phenylethyl radicals; alkaryl radicals such as the tolyl, xylyl and mesityl radicals; the corresponding halohydrocarbon radicals such as 3-chloropropyl, 4-bromobutyl, 3,3,3-trifluoropropyl, chlorocyclohexyl, bromophenyl, chlorophenyl, alpha, alpha, alphatrifluorotolyl and the dichloroxenyl radicals; the corresponding cyanohydrocarbon radicals such as 2-cyanoethyl, 3-cyanopropyl and cyanophenyl radicals: the corresponding radicals such as ether and ester hydro-carbon radicals such as $-(CH_2)_3OC_2H_5'$ $(CH_2)_3OCH_3'$ $(CH_2)_3COOC_2H_5'$ and $(CH_2)_3COOCH_3$, the corresponding thioether and thioester hydrocarbon radicals such as $-(CH_2)_3SC_2H_5$ and $-(CH_2)_3COSCH_3$; and nitrohydrocarbon radicals such as the nitrophenyl and 3-nitro-propyl radicals. It is preferred that the R' radical be an organic radical containing from 1 to 10 atoms. In the most preferred embodiment of this invention at least 90 percent of all the R' radicals are methyl radicals. There can be an average of from 0 to 2 R' radicals attached to the silicon atom, i.e., b has an average of from 0 to 2 in the above formula.

The R'' radical in the functional isocyanate reactive siloxanes of this invention can also be any hydrocarbon or substituted hydrocarbon radical. The illustrative examples given with respect to R' above are equally applicable here and are not repeated for the sake of brevity. Likewise, the preferences set forth for R' above also apply to the R'' radical. There can be from 0 to 3 R'' radicals, on the average, per silicon atom, i.e., c has an average value of from 1 to 3 in the above formula.

These polysiloxane slip agents can be made by well known techniques and are usually formed by grafting an olefin containing organic modifying group or polyoxyalkylene oxide onto a "Methylhydrogen siloxane" modified polydimethylsiloxane using a platinum catalyzed hydrosilation reaction.

The functional siloxanes of the slip agent can be either solid or liquid in form and are required to be substantially insoluble in isocyanate liquid under the molding conditions employed. In order to use a solid functional siloxane it would be necessary to dissolve, disperse or suspend the siloxane in one or more surfactants. Hence it is much preferred that the functional siloxane employed be either dispersed or dissolved in the active hydrogen-containing compound, component (ii), or if it is desired to combine the siloxane with the polyisocyanate, component (i), that it be in liquid form. While the viscosity of the liquid siloxane can vary over a wide range, for example from 1 to 100,000 cs., it is generally preferred that the viscosity be in the range of from 50 to 1000 cs. Molecular weight can vary from 100 to 30,000, preferrably 2000-20,000 and most preferred 4000-8000.

The following are illustrative examples of the types of polysiloxane slip agent compounds which can be used according to the invention.

(I) A hydroxy functional polysiloxane polyether copolymer slip agent compound having the approximate formula:

$$(CH_3)_3SiO[Si(CH_3)_2O]_{66}[Si(CH_3)(C_3H_6O(CH_2CH(CH_3)O)_{2.9}H)O]_3Si(CH_3)_3$$

having a molecular weight of about 6000, a hydroxy equivalent weight (d) of 2000, (e) is 11%, (f) is 35%, and a viscosity of 160 centistokes.

(II) A hydroxy functional thioether copolymer slip agent compound having the speculative formula:

$$[HOCH_2CH_2SCH_2CH_2CH_2(CH_3)_2SiO][Si(CH_3)_2O]_{70}[Si(CH_3)_2CH_2CH_2CH_2SCH_2CH_2OH]$$

having a hydroxy equivalent weight (d) of 2750, a molecular weight of 5500, a value for (e) of 4.3%, (f) is 39% and a viscosity of about 55 centistokes.

(III) A polysiloxane having a general formula as follows:

$$(CH_3)_3SiO[Si(CH_3)_2O]_{134}[Si(CH_3)(C_3H_6OC_2H_3(OH)CH_2OH)-O]_{16}Si(CH_3)_3$$

a molecular weight 13,136, (d) equivalent weight of 411, (e) is 16% and (f) is 33%.

(IV) A polysiloxane having a general formula as follows:

EP 0 283 172 B1

$(CH_3)_3SiO[Si(CH_3)_2O]_{63}[Si(CH_3)(C_3H_6OC2H_3(OH) CH_2OH)-O]_7Si(CH_3)_3$

a molecular weight 6,154, (d) equivalent weight 440, (e) is 15%, and (f) is 34%.

(V) A polysiloxane having the general formula:

$(CH_3)_3SiO[Si(CH_3)_2O]_{65}[Si(CH_3)(C_3H_6OC_2H_3 (OH)CH_2OH)-O]_5Si(CH_3)_3$

a molecular weight of 5918, (d) equivalent weight 592, (e) is 11%, and (f) is 34%.

(VI) A polysiloxane having the general formula:

$(CH_3)_3SiO[Si(CH_3)_2O]_{56}[Si(CH_3)C_3H_6O(C_2H_3(OH) CH_2OH)O]_{14}Si(CH_3)_3$

a molecular weight of 6980, (d) equivalent weight 249, (e) is 26%, and (f) is 28%.

(VII) A polysiloxane having the general formula:

$CH_3CH(OH)CH_2OC_3H_6Si(CH_3)_2O[Si(CH_3)_2O]_{89}Si(CH_3)_2C_3H_6OC_2H_4(OH)CH_3$

a molecular weight of 6962, (d) an equivalent weight of 3481, (e) is 3.4%, and (f) is 39%.

(VIII) A polysiloxane having the general formula:

$(CH_3)_3SiO[Si(CH_3)_2O]_{66}[(CH_3)Si(C_4H_8-PH-NH(C_3H_7)O]_3Si(CH_3)_3$

where PH = phenylene a molecular weight of 5782, and equivalent weight (d) of 1927, (e) is 9.9% and (f) is 37%.

(IX) A polysiloxane having the general formula:

$(CH_3)_3SiO[Si(CH_3)_2O]_{55}[HOCH_2CHOHCHOHCH (CH_2OH)CH(CH_2OH)Si(CH_3)O]_{14}Si(CH_3)_3$

a molecular weight of 7550, an equivalent weight (d) of 108, (e) is 33% and (f) is 26%.

(X) A polysiloxane having the general formula:

$(CH_3)_3SiO[Si(CH_3)_2O]_{61}[(CH_3)Si(C_3H_6OCH_2CH(OH)CH_2OH)O]_9Si(CH_3)_3$

a molecular weight of 6390, an equivalent weight (d) of 355, (e) is 19% and (f) is 32%.

The amount of functional siloxanes of this invention incorporated into the polyurethane (or polyurea or polyurethaneurea) can vary from 0.25 to 5 percent by weight of the total polyurethane formulation. While the exact amount will necessarily be determined by individual process and manufacturing considerations, from 0.5 to 2 percent should satisfy most needs.

Load bearing articles can be fabricated by reacting: (i) an organic polyisocyanate, (ii) an active hydrogen-containing compound, (iii) a slip agent compound, and (iv) a catalyst for the reaction of (i)-(iii). The active hydrogen compound/slip agent may, if desired, be blended with conventional polyols or the like to reduce the polysiloxane content to a lower level. Blends in which the resulting polysiloxane content is as low as 0.5 percent by weight of the total are useful for making load bearing articles.

The polyurethanes or polyureas useful in this invention can be formulated to contain additives as conventionally known and used in elastomer formulations. A non-exhaustive list of typical additives includes pigments for coloration, fillers to reduce economics or to impart special properties or modify existing properties of the elastomer, stabilizers to protect against chemical degradation such as oxidation or discoloration, defoaming agents to prevent foam formation, catalysts such as amines and organotin compounds conventionally known, biocides to prevent bacterial degradation, and plasticizers to modify physical properties of the elastomer such as hardness.

The amount of additives depends, of course, on the particular additives being used. As a general rule of thumb, the total weight of all additives should not exceed about 20 percent by weight based on the total formulation.

Chain extenders and crosslinkers can also be employed and are incorporated as part of the "B" (active hydrogen) component. A great number of di- or polyfunctional, active hydrogen-containing materials may be used, the most important being diols or polyols (monomers or oligomers), diamines and alkanolamines. Among the most useful are commercially available aliphatic diols and triols such as 1,4-butanediol, 1,6-

8

hexanediol, ethylene-, diethylene-, and dipropylene glycol, neopentyl glycol, as well as low molecular weight adducts of propylene oxide of trimethylolpropane and glycerol as well as simple polyhydric alcohols such as trimethylolpropane, glycerol and 1,2,6-hexanetriol. Aromatic, cycloaliphatic and heterocyclic diols include 1,4-bis(hydroxyethyl) hydro-quinone, bis(hydroxyethyl)- and bis (2-hydroxypropyl) bisphenol A, hydrogenated bisphenol A(2,2-bis(4-hydroxycyclohexyl) propane, cyclohexane 1,4-diol, and 1,4-bis(hydroxyethyl) piperazine. Bis (2-hydroxypropyl) isophthalate and bis (2-hydroxyethyl) carbamate can also be used, as can low molecular weight, hydroxyl-terminated polyesters, including poly(caprolactones), have also been employed as chain extenders.

Amino alcohols and tertiary nitrogen-containing diols and polyols can also be used as chain extenders, and in the case of triols and tetrols also as crosslinking agents. The presence of the tertiary amine in these molecules can have a catalytic effect on the reaction of isocyanate groups with polyols and thereby enhance their reactivity. Examples of difunctional amino alcohols are ethanolamine, diethanolamine, N-methyl-diethanolamine, bis (2-hydroxyethyl)- and bis (2-hydroxypropyl) aniline, and bis alkanol derivatives of piperazine or 2-methyl-piperazine. Triethanolamine as well as oxyalkylated products of triethanolamine, ethylenediamine, and triethylene diamine are typical examples of N-substituted triols and tetrols.

A very important class of chain extenders includes diamines. Aliphatic diamines react instantaneously while aromatic diamines and, in particular, hindered aromatic diamines (e.g., diamines containing substituents ortho to the amine groups) react considerably more slowly with isocyanates. Typical examples of aliphatic diamines include ethylene- and hexamethylenediamine. Cycloaliphatic diamines include isophorone diamine and 1,4-cyclohexyldiamine. Examples of aromatic diamines are methylene dianiline (MDA), phenylene diamines and tolylene diamines.

Among the hindered diamines 4,4'-methylene bis (o-chloro-aniline) (MOCA) can be used herein. However, because of suspected carcinogenic activity, the U.S. Government agency OSHA has placed restrictions on its use. MOCA substitutes suitable for use herein include the dimethyl ester of 4,4'-methylenedianthranilic acid (MBMA) and a sodium chloride coordination complex of 4,4'-methylene dianiline (Caytur 21, a predispersion of the coordination complex in dioctyl phthalate).

Other types of chain extenders and cross-linking agents which are commercially available include N,N',N''-tris (2-hydroxyethyl) isocyanurate, N,N'bis (2 hydroxyethyl) dimethylhydantoin and dimethylolpropionic acid.

Of course, some crosslinking will be contributed to the final polymer by components (i) and (ii) themselves, particularly if the components contain high functionality ingredients. If chain extenders/crosslinkers are employed, they may be used in such an amount that the average molecular weight between crosslinks can be as low as about 300.

Components (i), (ii) and (iii) can be formulated for molding via a low pressure casting process, meaning that the coreactants are mixed in the liquid state and poured or injected into the final mold. Casting is well known and understood in the art, see for example Polyurethane Technology, edited by Paul F. Bruins, Interscience Publishers, especially Chapter 9 titled "Casting of Urethane Elastoplastics". The reactants are metered and mixed and poured into a mold in such a manner that air will not be entrapped. The reactants may be all mixed and poured together in a so-called one shot system. Alternatively, a so-called two-step prepolymer-curative process, wherein excess polyisocyanate is first reacted with a stoichiometrically deficient amount of active hydrogen compound to form an isocyanate-terminated prepolymer, followed by reacting the prepolymer with the remaining active hydrogen compound, may be employed.

The use of the formulations for molding into load bearing articles can involve the use of a casting machine. Examples of casting machines include those offered commercially by Klockner Ferromatik Desma, Inc., West Concord, Massachusetts, including the DS 30/30 and PSA 91 models which can be used herein.

In the casting process, the polyisocyanate, component (i), is referred to as the "A" component and the mixture of active hydrogen-containing compounds or other isocyanate-reactive monomers, component (ii), including chain extenders, is referred to as the "B" component.

The slip agent compound, component (iii), can be incorporated into the casting formulation as part of the "A" component, although, because it is an active hydrogen compound, it is preferred to incorporate it as part of the "B" component. Advantageously, many of the slip agent compounds disclosed herein are generally soluble in the "B" component, making it a facile matter to mix the component so that it is uniform.

If it is desired to incorporate the slip agent into the "A" component comprising a polyisocyanate, the slip agent will prereact with the polyisocyanate if it is a fatty alcohol or a fatty amine. Care should be taken to insure that the "A" component is well mixed by using, for example, conventional propeller or paddle type stirrers.

If it is desired to incorporate an active hydrogen-containing polysiloxane slip agent into the "A" component, such can be accomplished with the aid of a silicone surfactant (substantially free of isocyanate reactivity) since the polysiloxane slip agents are substantially insoluble in polyisocyanates, as previously noted.

The silicone surfactants which are used as dispersing agents for the polysiloxane slip agent to make polyisocyanate liquid dispersions are modified polydialkyl siloxane polymers, especially polydimethyl-siloxanes. These materials are well known and readily commercially available in numerous modifications having side chains linked to the silicon atoms through linking groups composed of carbon and hydrogen; carbon, hydrogen and oxygen; carbon, hydrogen and sulfur; carbon, hydrogen and nitrogen; or carbon, hydrogen, oxygen and nitrogen. Those which are substantially free of isocyanate reactivity at temperatures below 25°C and which are completely or partly stable to moisture are preferred. For the most part these silicone surfactants are made by grafting on organic side chains which are substantially free of isocyanate reactivity.

Silicone surfactants generally conform to the general formula:

$$(CH_3)_3 Si[OSi(CH_3)_2]_x[(CH_3)R^+ SiO]_y[(CH_3)R^* SiO]_z Si(CH_3)_3$$

where the value of x, y or z vary from 10-1000 and where $R^+$ and $R^*$ may be the same or different and be selected from alkyl pendant radicals such as polyalkyl ether or alkoxyether groups such as $-CH_2 CHRO-(CH_2-CHRO)_m-C_m H_{2m+1}$ or $-OCH_2 CHRO(CH_2 CHRO)_m- C_n H_{2n+1}$ where R is H, $-CH_3$, $-C_2 H_5$ where the sum of m + n is such that the total formula weight of the polyoxyalkylene block and other grafted radicals ranges from 800-40,000, the polysiloxane block ranges from 15-70% of the molecular weight and n is 1-5; or grafted monovalent radicals selected from methoxy, ethoxy, ethylene, styrene, trifluoropropene, allyltetrahydro-furfuryl either, allyloxyethyl acetate, acrolein diethylacetal, allyl-cyanide, allyloxyethyl cyanide, allylmorpholine, allyl-chloride and others.

Specific suitable silicone surfactants are disclosed in U.S. patent 4,477,366, commonly assigned, herein incorporated by reference. The silicone surfactant can be used in an amount from 1 to 25 weight % based on the weight of the polysiloxane slip agent plus the silicone surfactant.

If additives are employed they are generally incorporated into the B component, although they may also be added to the A component so long as they are not isocyanate-reactive. The B component mixture, including additives, may be blended or agitated in a suitable container or supply tank, and agitated, generally at ambient temperature, although temperatures up to about 72°C may be employed. Agitation can be conducted in the casting machine using conventional propeller type stirrers (generally supplied by the casting machine manufacturer) at RPM's of several hundred at most.

The "A" and "B" components are placed in separate containers, which are generally equipped with agitators, of the casting machine wherein the temperature of each component is preferably about 20°C to about 30°C. Solvents are generally not used in casting since the A and B components are each already liquid. Molded polyurethane products are made by conducting each component via suitable metering pumps, to a mixing head where the components are mixed under low pressures, generally pressures less than 30 bar, preferably less than 20 bar. The mixed components can then be poured or injected into a mold in which, if desired, a rigid foam core of any suitable material known for such purpose has been centrally disposed.

Once a desired mold shape has been filled, the mold is closed and curing is effected. Generally curing temperatures of about 50°C to about 72°C can be used. Curing requires about 3 to 20 minutes, usually about 5 to 15 minutes. This rate of reactivity is ample to allow mixing and mold filling, yet sufficiently rapid to allow high rates of production.

The reaction of the "A" component and "B" component to make the polyurethanes of this invention is carried out at an isocyanate index between about 0.90 and about 1.30, preferably between about 0.95 and about 1.15. Most preferably, the reaction is carried out at an isocyanate index substantially equal to 1.10

Although a detailed description of casting has been given above, the description is for the purpose of Illustration. The load bearing articles of this invention can also be made by other equally well known and understood molding technologies. The low pressure casting may be conducted using a static mixer in place of the mechanical mixing previously described. Molding may also be effectively conducted using high pressure mixing equipment. Different molding methods including reaction injection molding (RIM) technology may also be employed.

The invention is further described and disclosed by means of the following examples which are not to be taken as limiting. Amounts shown in the examples are in parts by weight (pbw), unless otherwise noted.

The following is a glossary of terms used in the examples:

GLOSSARY

Polyol 32-75

An ethylene oxide-tipped triol having a hydroxyl number of 32, a functionality of 3, and a viscosity of 1000 centipoises (cps).

VORANOL 800

Trademark for a polyol having a hydroxyl number of 800, a functionality of 4, and a viscosity of 17000 cps.

VORANOL 2025

Trademark for a polyol having a hydroxyl number of 660, a functionality of 3, and a viscosity of 850 cps.

1,4-butanediol

Tin catalyst T12

Dibutyl tin dilaurate.

Dabco 33 LV

33% triethylene diamine in dipropylene glycol.

Rubinate LF 179

A urethane pseudoprepolymer modified derivative of pure 4,4'-diphenylmethane diisocyanate containing not more than 2% by weight of the 2,4'-diphenylmethane diisocyanate isomer, which derivative has a free isocyanate (-NCO) content of about 23.0% by weight and an average functionality of 2.00.

Example 1

Bearings are made of the following formulations 1A-1C (amounts in parts by weight, pbw):

| Example | 1A | 1B | 1C |
|---|---|---|---|
| Component B | | | |
| Polyol 32-75 | 100.00 | 100.00 | 100.00 |
| 1,4-butanediol | 10.16 | 10.16 | 10.16 |
| VORANOL 800 | 22.25 | 22.25 | 22.25 |
| DABCO 33LV | 0.07 | 0.07 | 0.07 |
| Tin Catalyst T12 | 0.07 | 0.07 | 0.07 |
| Hydroxy reactive polysiloxane I | 0 | 3.00 | 6.00 |

Component A (1A-1C)

Rubinate LF 179 in an amount sufficient to achieve an isocyanate index of 1.15 when reacted with component B.

"Hydroxy reactive polysiloxane I", referred to above and in subsequent examples, has the following formula:

$$(CH_3)_3 SiO[Si(CH_3)_2 O]_{66} [Si(CH_3)(C_3 H_6 O(CH_2 CH(CH_3)O)_{2.9}H)O]_3 Si(CH_3)_3$$

For each bearing, components A and B are metered in the above proportions, mixed and dispensed into a bearing mold. The mixed liquid reactants are poured into the mold in a manner designed to eliminate trapped air bubbles within or on the surface of the molding. The hardness of the cured elastomer is about 78 Shore D for each bearing.

The molding conditions were as follows:

| | |
|---|---|
| Mold Temperature | 140°F |
| Demold time | 10 Minutes |
| Rate of pour | 10 lb./min. |

Bearings made from formulation 1B and 1C exhibit lower friction than a bearing made from formulation 1A.

Example 2

11

Three bearings are made as described in Example 1, the bearings being made from the following formulations 2A-2C (amounts in pbw):

| Example | 2A | 2B | 2C |
|---|---|---|---|
| Component B | | | |
| Polyol 32-75 | 100.00 | 100.00 | 100.00 |
| 1,4-butanediol | 10.16 | 10.16 | 10.16 |
| VORANOL 2025 | 54.00 | 54.00 | 54.00 |
| DABCO 33LV | 0.07 | 0.07 | 0.07 |
| Tin Catalyst ST T12 | 0.07 | 0.07 | 0.07 |
| Hydroxy reactive polysiloxane I | 0 | 3.00 | 6.00 |

Component A (2A-2C)

Rubinate LF 179 in an amount sufficient to achieve an isocyanate index of 1.15 when reacted with component B.

Each bearing has a Shore D hardness of about 78.

Bearings made from formulations 2B and 2C exhibit lower friction than a bearing made from formulation 1A.

Example 3

Two bearings are made as described in Example 1 from the following formulations 3A-3B.

| Example | 3A | 3B |
|---|---|---|
| Component B | | |
| Polyol 32-75 | 100.00 | 100.00 |
| 1,4-butanediol | 12.20 | 12.20 |
| VORANOL 800 | 26.70 | 26.70 |
| Tin Catalyst T12 | 0.07 | 0.07 |
| PRIMAROL 1511B | 0 | 7.00 |

Component A (3A-3B)

Rubinate LF 179 in an amount sufficient to achieve an isocyanate index of 1.15 when reacted with component B.

PRIMAROL 1511B, referred to above, is isohexacosanol.

Both bearings have a Shore D hardness of about 78.

The bearing made from formulation 3B exhibits lower friction than a bearing made from formulation 3A.

Example 4

Two bearings are made as described in Example 1 from the following formulations 4A-4B.

12

| Example | 4A | 4B |
|---|---|---|
| Component B | | |
| Polyol 32-75 | 100.00 | 100.00 |
| 1,4-butanediol | 12.20 | 12.20 |
| VORANOL 2025 | 64.83 | 64.83 |
| Tin Catalyst T12 | 0.07 | 0.07 |
| DABCO 33LV | 0.07 | 0.07 |
| PRIMAROL 1511B | 0 | 7.00 |

Component A (4A-4B)

Rubinate LF 179 in an amount sufficient to achieve an isocyanate index of 1.15 when reacted with component B.

Each bearing has a Shore D hardness of about 78.

The bearing made from formulation 4B exhibits lower friction than a bearing made from formulation 4A.

Examples 5-8

Examples 5-8 were conducted to show the reduced friction achievable with load bearing articles (bearings) according to the invention, which contain slip agent compounds.

HORIZONTAL PLANE TEST

Test plaques as previously described were molded from the compositions of Examples 1-4 and were tested by ASTM D1894-78 to determine their friction when pulled as a "sled" carrying a 20 lb load across a horizontal surface designed to simulate a lane. The horizontal surface was furniture grade cherry wood veneer on a one-half inch thick plywood substrate wherein the surface was finished with two coats of conventional alkyl varnish.

The apparatus used to apply force to pull the sled at constant speed across the horizontal surface was an Instron Tester set up to correspond with apparatus assembly illustration (c) of ASTM D1894-78. Two values were useful in assessing frictional engagement of the sled with the horizontal surface. The first was the frequency of oscillation (in oscillations/inch) which corresponded generally to the number of times per unit length the sled "grabbed" or frictionally engaged with the horizontal surface. The second was the amplitude of the oscillations which corresponded to the magnitude of the frictional drag with which the sled "grabbed" the horizontal surface as it was pulled. The two values together allowed a semi-quantitative assessment of frictional engagement of the horizontal surface with the sled. Relatively few oscillations of low magnitude indicated a relatively smooth travel of the test sled, i.e. that the sled "grabbed" with low frequency and relatively little force from the Instron was required to break each frictional engagement. Conversely, a high frequency of high amplitude oscillations indicated a much stronger frictional engagement, i.e. that the sled "grabbed" the horizontal surface more frequently and more strongly, corresponding to a relatively rough "chattering" as it was pulled.

The test plaques (sleds) were tested at least three days after molding.

INCLINED PLANE TEST

Test plaques molded from the compositions of Examples 1-4 were allowed to slide freely down a test (stainless steel) surface according to ASTM D3248, the angle at which the test plaques slid being recorded for use in calculating the coefficient of friction between the plaque and surface. The stainless steel test surface was supplied as standard equipment on a TMI coefficient of Friction Tester Model No. 98.25.

The test plaque weight was 214.0 grams. The lowest angle at which the plaque slid was recorded and used to calculate the coefficient of friction.

Results are presented in the Examples following

Example 5

13

The following compositions 5A-5C correspond, respectively, to compositions 1A-1C.

|                              | 5A   | 5B   | 5C    |
|------------------------------|------|------|-------|
| **Horizontal Plane**         |      |      |       |
| Frequency (osc./cm.)         | 24   | 16   | 16    |
| Amplitude (cms)              | 0.5  | 0.25 | 0.127 |
| **Inclined Plane**           |      |      |       |
| Angle of slide (deg.)        | 19   | 17   | 12    |
| Coeff. of frict. (calc.)     | 0.34 | 0.31 | 0.21  |

## Example 6

The following compositions 6A-6C correspond, respectively, to compositions 2A-2C.

|                              | 6A   | 6B   | 6C    |
|------------------------------|------|------|-------|
| **Horizontal Plane**         |      |      |       |
| Frequency (osc./cm.)         | 24   | 16   | 12    |
| Amplitude (cms)              | 0.5  | 0.25 | 0.127 |
| **Inclined Plane**           |      |      |       |
| Angle of Slide (deg.)        | 23   | 18   | 15    |
| Coeff. of frict. (calc.)     | 0.42 | 0.32 | 0.27  |

## Example 7

The following compositions 7A and 7B correspond, respectively, to compositions 3A-3B.

|                              | 7A   | 7B    |
|------------------------------|------|-------|
| **Horizontal Plane**         |      |       |
| Frequency (osc./cm)          | 24   | 16    |
| Amplitude (cms)              | 0.5  | 0.127 |
| **Inclined Plane**           |      |       |
| Angle of slide (deg.)        | 19   | 12    |
| Coeff. of frict. (calc.)     | 0.34 | .021  |

## Example 8

The following compositions 8A-8B correspond, respectively, to compositions 4A-4B.

| | 8A | 8B |
|---|---|---|

**Horizontal Plane**

Frequency (osc./cm)      24      20

Amplitude (cms)      < 0.5      0.127

**Inclined Plane**

Angle of slide (deg.)      23      15

Coeff. of frict. (calc.)      0.42      0.27

**Claims**

1. A load bearing article adapted for use in a frictional environment, said article having at least the outer portion of its functional surface fabricated from a polymer made from reactants comprising

    (i) a polyisocyanate in an amount of at least about 10 wt. percent based on the total weight of all reactants used to make said polymer,

    (ii) an active hydrogen-containing compound having a number-averaged active hydrogen functionality of at least 2.0, and

    (iii) a slip agent compound containing a moiety which imparts lubricity to said surface, said slip agent compound also having at least one active hydrogen-containing group which is reactive with isocyanate groups, wherein said slip agent compound is present in an amount between about 0.5 and about 5 weight percent based on the weight of (i) and (ii),

    the ratio of (i) to the total of (ii) plus (iii) being such that the reaction is conducted at an isocyanate index between about 0.90 and about 1.30.

2. A load bearing article as defined in Claim 1, wherein said slip agent compound is a fatty alcohol containing 10-40 carbon atoms.

3. A load bearing article as defined in Claim 2, wherein said fatty alcohol contains 15-40 carbon atoms.

4. A load bearing article as defined in Claim 2, wherein said fatty alcohol is n-decyl alcohol, n-undecyl alcohol, n-dodecyl alcohol, n-tetradecyl alcohol, n-hexadecyl alcohol, n-octadecyl alcohol, or isostearyl alcohol.

5. A load bearing article as defined in Claim 1, wherein said slip agent is a secondary monoamine of the formula

    $R^1$-NH-$R^2$

    wherein $R^1$ is an aliphatic hydrocarbon group having from 10-40 carbon atoms and $R^2$ is an aliphatic hydrocarbon group containing 1-20 carbon atoms.

6. A load bearing article as defined in any of Claims 1 to 5, wherein said slip agent consists essentially of 0.5-20 mol% of $R_a R'_b SiO_{[4-(a+b)]1/2}$ Units and from 99.5-80 mol % of $R''_c SiO_{(4-c)/2}$ units where

    R      is an isocyanate reactive organic radical,

    a      has an average value of from 1-3,

    R' and R'      are hydrocarbon radical or a substituted organic radical

    b      has an average value of 0-2,

    a + b      is from 1-3,

    c      has an average value from 1 to 3, and

    wherein

    the ratio of the total molecular weight to the total number of isocyanate reactive functional groups in the polysiloxane molecule (equivalent weight) ranges from 100-3500,

    the combined formula weights of all iscyanate reactive organic radicals, R do not exceed 40% of the total molecular weight of said polysiloxane slip agent,

15

the combined formula weights of all non-isocyanate reactive radicals, R′ + R″ together do not exceed 40% of the total molecular weight of said polysiloxane slip agent,

the combined formula weights of all the organic radicals R + R′ + R″ in the molecule together do not exceed 60% of the total molecular weight of the molecule,

said polysiloxane slip agent contains an average of at least two isocyanate reactive functional groups per molecule,

at least two of the isocyanate reactive functional groups in each molecule are located on separate organic radicals, R, attached independently to different silicon atoms in said polysiloxane,

said isocyanate reactive functional groups (R) are selected from the group consisting of alcohols, phenols, thiols, primary or secondary aromatic amines, which contain no oxygen, and not more than one nitrogen, atoms attached directly to, in conjunction with, or incorporated within, the aromatic ring nucleus, and secondary aliphatic amines wherein at least one of the alkyl carbon atoms, bonded directly to the nitrogen atom, is not a primary carbon atom,

the molecular weight of said polysiloxane slip agent ranges from 1000 to 30,000, and

said polysiloxane slip agent is substantially insoluble in liquid polyisocyanate.

7. A load bearing article as defined in any of Claims 1 to 6, wherein said slip agent (iii) is blended with said active hydrogen-containing compound (ii).

8. A load bearing article as defined in any preceding Claim, wherein said slip agent compound (iii) is prereacted with or dispersed in said polyisocyanate (i).

9. A load bearing article as defined in any preceding Claim, wherein said polyisocyanate is selected from toluenediisocyanate, diphenylmethane diisocyanate, methylene bridged polyphenylmethane polyisocyanates, and isomers thereof.

10. A load bearing article as defined in any preceding Claim, wherein said diphenylmethane diisocyanate is modifed to contain carbodiimide groups, uretonimine groups, urethane groups, sulfonate groups, isocyanurate groups, urea groups or biuret groups such that it is a liquid at room temperature.

**Revendications**

1. Article porteur de charge apte à être utilisé dans un milieu ou s'exercent des frictions, ledit article ayant au moins la partie extérieure de sa surface fonctionnelle fabriquée à partir d'un polymère produit à partir de corps réactionnels comprenant :

(I) un polyisocyanate en une quantité d'au moins environ 10% en poids, sur la base du poids total de tous les corps réactionnels utilisés pour la production dudit polymère,

(II) un composé comprenant de l'hydrogène actif, ayant une moyenne numérique de fonctionnalité d'hydrogène actif d'au moins 2,0, et

(III) un agent de glissement contenant un groupement qui confère un pouvoir lubrifiant à ladite surface, ledit agent de glissement comprenant également au moins un groupe contenant de l'hydrogène actif qui est réactif avec les groupes isocyanate, ledit agent de glissement étant présent en une quantité d'environ 0,5 à environ 5% en poids, sur la base du poids des constituants (I) et (II),

le rapport de la quantité du constituant (I) à la somme des quantités des constituants (II) et (III) étant choisi de sorte que la réaction soit conduite à un indice d'isocyanate d'environ 0,90 à environ 1,30.

2. Article porteur de charge suivant la revendication 1, dans lequel l'agent de glissement est un alcool gras contenant 10 à 40 atomes de carbone.

3. Article porteur de charge suivant la revendication 2, dans lequel l'alcool gras contient 15 à 40 atomes de carbone.

4. Article porteur de charge suivant la revendication 2, dans lequel l'alcool gras est l'alcool n-décylique, l'alcool n-undécylique, l'alcool n-dodécylique, l'alcool n-tétradécylique, l'alcool n-hexadécylique, l'alcool n-octadécylique ou l'alcool isostéarylique.

5. Article porteur de charge suivant la revendication 1, dans lequel l'agent de glissement est une mono-amine secondaire de formule

$R^1$-NH-$R^2$

dans laquelle $R^1$ représente un groupe hydrocarboné aliphatique ayant 10 à 40 atomes de carbone et $R^2$ représente un groupe hydrocarboné aliphatique contenant 1 à 20 atomes de carbone.

**6.** Article porteur de charge suivant l'une quelconque des revendications 1 à 5, dans lequel l'agent de glissement comprend essentiellement 0,5 à 20 moles % de motifs $R_aR'_bSiO_{[4-(a+b)]/2}$ et 99,5 à 80 moles % de motifs $R''_cSiO_{(4-c)/2}$, dans lesquels

R représente un radical organique réactif avec les groupes isocyanate,
a a une valeur moyenne de 1 à 3,
R' et R'' représentent chacun un radical hydrocarboné ou un radical organique substitué,
b a une valeur moyenne de 0 à 2,
la somme a + b a une valeur de 1 à 3,
c a une valeur moyenne de 1 à 3, et
dans lequel

le rapport du poids moléculaire total au nombre total de groupes fonctionnels, réactifs avec les groupes isocyanate, dans la molécule de polysiloxanne (poids équivalent) va de 100 à 3 500,

la somme des poids selon formule de tous les radicaux organiques R, réactifs avec les groupes isocyanate, n'excède pas 40% du poids moléculaire total dudit polysiloxanne servant d'agent de glissement,

la somme des poids selon formule de tous les radicaux organiques R' + R'', non réactifs avec les groupes isocyanate, n'excède pas 40% du poids moléculaire total dudit polysiloxanne servant d'agent de glissement,

la somme des poids selon formule de tous les radicaux organiques R + R' + R'' dans la molécule n'excède pas 60% du poids moléculaire total de la molécule,

ledit polysiloxanne servant d'agent de glissement contient en moyenne par molécule au moins deux groupes fonctionnels réactifs avec le groupe isocyanate,

au moins deux des groupes fonctionnels, réactifs avec les groupes isocyanate, dans chaque molécule sont situés sur des radicaux organiques R distincts, fixés de manière indépendante à des atomes de silicium différents dans ledit polysiloxanne,

lesdits groupes fonctionnels (R), réactifs avec les groupes isocyanate, sont choisis dans le groupe comprenant des alcools, des phénols, des thiols, des amines aromatiques primaires ou secondaires, qui ne contiennent pas d'atomes d'oxygène et pas plus d'un atome d'azote fixés directement, conjugués ou incorporés au noyau aromatique, et des amines aliphatiques secondaires dans lesquelles au moins un des atomes de carbone des groupes alkyle, liés directement à l'atome d'azote, n'est pas un atome de carbone primaire,

le poids moléculaire dudit polysiloxanne servant d'agent de glissement est compris dans l'intervalle de 1000 à 30 000, et

ledit polysiloxanne servant d'agent de glissement est pratiquement insoluble dans le polyisocyanate liquide.

**7.** Article porteur de charge suivant l'une quelconque des revendications 1 à 6, dans lequel l'agent de glissement (III) est mélangé au composé (II) contenant de l'hydrogène actif.

**8.** Article porteur de charge suivant l'une quelconque des revendications précédentes, dans lequel l'agent de glissement (III) est soumis à une réaction préalable avec, ou est dispersé dans, le polyisocyanate (I).

**9.** Article porteur de charge suivant l'une quelconque des revendications précédentes, dans lequel le polyisocyanate est choisi entre le toluène-diisocyanate, le diisocyanate de diphénylméthane, des polyisocyanates de polyphénylméthane à pontage méthylène et leurs isomères.

**10.** Article porteur de charge suivant l'une quelconque des revendications précédentes, dans lequel le diisocyanate de diphénylméthane est modifié de manière à contenir des groupes carbodimide, des groupes urétone-imine, des groupes uréthanne, des groupes sulfonate, des groupes isocyanurate, des groupes urée ou des groupes biuret de sorte qu'il soit liquide à température ambiante.

**Patentansprüche**

1. Belastbarer Gegenstand, der für die Anwendung in einer Reibungsumgebung geeignet ist, wobei mindestens der äußere Teil der funktionellen Oberfläche des Gegenstandes aus einem Polymer gefertigt ist, das aus Reaktionsteilnehmern hergestellt ist, die aus

(i) einem Polyisocyanat in einer Menge von mindestens etwa 10 Masseprozent, bezogen auf die Gesamtmasse aller Reaktionsteilnehmer, die zur Herstellung des Polymers verwendet werden,

(ii) einer aktiven Wasserstoff enthaltenden Verbindung mit einem mindestens 2,0 betragenden Mittelwert (Zahlenmittel) der Funktionalität des aktiven Wasserstoffs und

(iii) einer Gleitmittelverbindung, die einen Anteil enthält, der der erwähnten Oberfläche Schmierfähigkeit verleiht, wobei die Gleitmittelverbindung auch mindestens eine aktiven Wasserstoff enthaltende Gruppe hat, die mit Isocyanatgruppen reaktionsfähig ist, wobei die Gleitmittelverbindung in einer Menge vorhanden ist, die zwischen etwa 0,5 und etwa 5 Masseprozent, bezogen auf die Masse von (i) und (ii), liegt,

bestehen, wobei das Verhältnis von (i) zu der Gesamtmenge von (ii) und (iii) derart ist, daß die Reaktion mit einer zwischen etwa 0,90 und etwa 1,30 liegenden Isocyanatzahl durchgeführt wird.

2. Belastbarer Gegenstand nach Anspruch 1, bei dem die Gleitmittelverbindung ein Fettalkohol ist, der 10 bis 40 Kohlenstoffatome enthält.

3. Belastbarer Gegenstand nach Anspruch 2, bei dem der Fettalkohol 15 bis 40 Kohlenstoffatome enthält.

4. Belastbarer Gegenstand nach Anspruch 2, bei dem der Fettalkohol n-Decylalkohol, n-Undecylalkohol, n-Dodecylalkohol, n-Tetradecylalkohol, n-Hexadecylalkohol, n-Octadecylalkohol oder Isostearylalkohol ist.

5. Belastbarer Gegenstand nach Anspruch 1, bei dem das Gleitmittel ein sekundäres Monoamin der Formel

$R^1$-NH-$R^2$

ist, worin $R^1$ eine aliphatische Kohlenwasserstoffgruppe ist, die 10 bis 40 Kohlenstoffatome enthält, und $R^2$ eine aliphatische Kohlenwasserstoffgruppe ist, die 1 bis 20 Kohlenstoffatome enthält.

6. Belastbarer Gegenstand nach einem der Ansprüche 1 bis 5, bei dem das Gleitmittel im wesentlichen aus 0,5 bis 20 Mol%

$R_a R'_b SiO_{[4 - (a + b)]/2}$-Einheiten

und aus 99,5 bis 80 Mol%

$R''_c SiO_{(4 - c)/2}$-Einheiten

besteht, worin
R ein mit Isocyanat reaktionsfähiger organischer Rest ist,
a einen Mittelwert von 1 bis 3 hat,
R' und R'' einen Kohlenwasserstoffrest oder einen substituierten organischen Rest bedeuten,
b einen Mittelwert von 0 bis 2 hat,
a + b zwischen 1 und 3 liegt,
c einen Mittelwert von 1 bis 3 hat und
wobei
das Verhältnis des Gesamtmolekulargewichts zur Gesamtzahl der mit Isocyanat reaktionsfähigen funktionellen Gruppen in dem Polysiloxanmolekül (Äquivalentgewicht) in dem Bereich von 100 bis 3500 liegt,
die vereinigten Formelgewichte aller mit Isocyanat reaktionsfähigen organischen Reste, R, 40 % des Gesamtmolekulargewichts des Polysiloxan-Gleitmittels nicht überschreiten,
die vereinigten Formelgewichte aller nicht mit Isocyanat reaktionsfähigen Reste, R' + R'', zusammen 40 % des Gesamtmolekulargewichts des Polysiloxan-Gleitmittels nicht überschreiten,
die vereinigten Formelgewichte aller organischen Reste, R + R' + R'', in dem Molekül zusammen 60 % des Gesamtmolekulargewichtes des Moleküls nicht überschreiten,

das Polysiloxan-Gleitmittel je Molekül durchschnittlich mindestens zwei mit Isocyanat reaktionsfähige funktionelle Gruppen enthält,

sich mindestens zwei der mit Isocyanat reaktionsfähigen funktionellen Gruppen in jedem Molekül an getrennten organischen Resten, R, befinden, die unabhängig an verschiedene Siliciumatome in dem Polysiloxan gebunden sind,

die mit Isocyanat reaktionsfähigen funktionellen Gruppen (R) aus der Gruppe ausgewählt sind, die aus Alkoholen, Phenolen, Thiolen, primären oder sekundären aromatischen Aminen, die kein Sauerstoff- und nicht mehr als ein Stickstoffatom enthalten, das direkt an den aromatischen Ring gebunden, damit konjugiert oder darin eingebaut ist, und sekundären aliphatischen Aminen, bei denen mindestens eines der direkt an das Stickstoffatom gebundenen Alkylkohlenstoffatome kein primäres Kohlenstoffatom ist, besteht,

das Molekulargewicht des Polysiloxan-Gleitmittels in dem Bereich von 1000 bis 30.000 liegt und

das Polysiloxan-Gleitmittel in flüssigem Polyisocyanat im wesentlichen unlöslich ist.

7. Belastbarer Gegenstand nach einem der Ansprüche 1 bis 6, bei dem das Gleitmittel (iii) mit der aktiven Wasserstoff enthaltenden Verbindung (ii) vermischt wird.

8. Belastbarer Gegenstand nach einem der vorhergehenden Ansprüche, bei dem die Gleitmittelverbindung (iii) mit dem Polyisocyanat (i) vorumgesetzt oder darin dispergiert wird.

9. Belastbarer Gegenstand nach einem der vorhergehenden Ansprüche, bei dem das Polyisocyanat aus Toluoldiisocyanat, Diphenylmethandiisocyanat, Polyphenylmethanpolyisocyanaten mit Methylenbrücken und Isomeren davon ausgewählt ist.

10. Belastbarer Gegenstand nach einem der vorhergehenden Ansprüche, bei dem das Diphenylmethandiisocyanat modifiziert wird, damit es Carbodiimidgruppen, Uretonimingruppen, Urethangruppen, Sulfonatgruppen, Isocyanuratgruppen, Harnstoffgruppen oder Biuretgruppen enthält, so daß es bei Raumtemperatur eine Flüssigkeit ist.